# EUROPEAN PATENT SPECIFICATION

(11) **EP 1 634 045 B1**
(45) Date of publication and mention of the grant of the patent: **11.01.2012**
(21) Application number: 04736533.3
(22) Date of filing: 10.06.2004
(51) Int. Cl.: G01K 7/18, H05B 3/74

(54) **TEMPERATURE SENSOR ASSEMBLY FOR AN ELECTRICAL HEATING ARRANGEMENT**
TEMPERATUR-SENSORANORDNUNG FÜR EINE ELEKTRISCHE HEIZVORRICHTUNG
ENSEMBLE CAPTEUR DE TEMPERATURE POUR AGENCEMENT DE CHAUFFAGE ELECTRIQUE

(30) Priority: 13.06.2003 GB 0313703
(43) Date of publication of application: 15.03.2006
(73) Proprietor: Stylewell Limited, Cardiff CF10 2DX (GB)
(72) Inventor: WILKINS, Peter, Ravenscroft, Worcestershire WR9 7DU (GB); ALVES, Brian, Roger, Worcestershire WR13 6DY (GB); WALKER, David, West Midlands WV11 1SB (GB)
(74) Representative: Jackson, Derek Charles
(86) International application number: PCT/GB2004/002514
(87) International publication number: WO 2004/111589

(56) References cited:
- US-A- 4 633 238
- US-A- 4 708 769
- US-A- 5 489 764
- US-A- 5 823 680

## Description

This invention relates to a temperature sensor assembly for use with an electrical heating arrangement in a cooking appliance, in which a cooking plate, such as of glass-ceramic material, has an upper surface for receiving a cooking utensil and a lower surface having supported in contact therewith an electric heater incorporating at least one electric heating element.

It is well known to provide an electrical heating arrangement for a cooking appliance in which a temperature sensing device is arranged under a glass-ceramic cooking plate in order to monitor the temperature of the cooking plate and to operate to de-energise one or more heating elements in a heater under the cooking plate when a particular temperature is reached, in order to prevent thermal damage to the cooking plate.

Requirements exist for sensing the temperature of a cooking utensil, such as a pan, located on the upper surface of a cooking plate, using a temperature sensing device provided underneath the cooking plate. A problem is encountered in that it is required to be able to measure small changes in temperature in the cooking plate overlying the temperature sensing device, such as, for example, occur when a boil-dry situation arises in the cooking utensil. Good thermal coupling is required between the temperature sensing device and the cooking plate. However, the temperature sensing device also receives direct thermal radiation from the one or more heating elements in the underlying heater and this makes it very difficult for the temperature sensing device to distinguish the small changes in temperature of the cooking plate associated with the boil dry situation, or any other situation where small changes in temperature in the cooking plate are required to be monitored. Furthermore, thermal "noise" arising from fluctuations in a controlled set-point temperature in the heater can interfere with the measurement of the small changes in temperature in the cooking plate.

It is known to provide what is referred to as a 'cool patch' of a glase-ceramic cooking plate within a heated area by an arrangement in which a discrete temperature sensing device surrounded by a thermally insulating enclosure is urged directly against a region of the lower surface of the cooking plate, to sense a change in temperature of the cooking plate produced by an overlying cooking utensil conducting heat back into the cooking plate in that area. Such a discrete temperature sensing device has been provided of capillary or electromechanical form, or of platinum resistance temperature detector form, urged against the lower surface of the cooking plate, such as by spring loading means. Such an arrangement is bulky and expensive to implement.

It is an object of the present invention to overcome or minimise this problem.

According to one aspect of the present invention there is provided a temperature sensor assembly for an electrical heating arrangement, the temperature sensor assembly comprising: a thin substantially planar substrate having a first, exposed surface provided with a temperature-sensitive electrical resistance element of film form, and a second surface, the temperature-sensitive electrical resistance element being provided with electrical connecting leads; a support member having a first surface adapted to receive the substantially planar substrate with the second surface of the substrate juxtaposed therewith; and thermal insulation means interposed between at least the second surface of the substantially planar substrate and the support member at least at a region where the temperature-sensitive electrical resistance element is provided.

The support member may have a recess provided in its upper surface, the recess being adapted and arranged to receive the substantially planar substrate and the thermal insulation means.

The thermal insulation means may additionally be interposed between the support member and one or more side edges of the substantially planar substrate in the recess.

The thermal insulation means may comprise a thin layer of microporous thermal insulation material and/or alternative thermal insulation material. The alternative thermal insulation material may be selected from vermiculite, perlite, mineral fibre, calcium silicate and inorganic foam and mixtures thereof.

The thermal insulation means may be suitably provided with a thickness thereof of from 1 to 10 mm, preferably from 2 to 4 mm, between the substantially planar substrate and the support member.

The support member may comprise a ceramic material, such as steatite, cordierite or alumina. Alternatively, the support member may be made of metal, such as stainless steel.

The substantially planar substrate may be selected from ceramic materials such as a ceramic comprising 85-99 weight percent alumina, glass ceramic and aluminium nitride and a metallic material having a dielectric coating and may have a thickness from about 0.25 mm to about 3 mm, preferably from about 0.5 mm to about 1 mm.

The support member may be of elongate form arranged as a beam and adapted to extend at least partly across a heater of an electrical heating arrangement, the beam being adapted to extend from a peripheral region of the heater. Such support member of elongate form may have a first end thereof adapted to be secured at the peripheral region of the heater and a second end thereof adapted to be within the heater, the temperature-sensitive electrical resistance element being located at or near the second end thereof, with the electrical connecting leads extending from the temperature-sensitive electrical resistance element to the first end of the support member.

The substantially planar substrate may be of elongate form, extending along the elongate support member and having the temperature-sensitive electrical resistance element located at a first end region thereof and with the electrical connecting leads being provided of film form on the substrate and extending to a second end region thereof located at the first end of the support member. The film-form electrical connecting leads may comprise substantially the same or similar material as the temperature-sensitive electrical resistance element.

Electric terminal means for the film-form electrical connecting leads may be provided at the second end region of the substantially planar substrate. Such electric terminal means may comprise electrically conductive pads, such as comprising substantially the same or similar material as the electrical connecting leads or a different material such as gold, to which external connecting leads may be arranged to be connected, such as by soldering, brazing or welding.

Alternatively, holes may be provided through the pads and through the substantially planar substrate, for receiving electrically connecting members, which may have electrically conductive terminal tabs or pins associated therewith for connection to external circuitry. Such holes may also be provided through an underlying region of the support member and arranged to receive the electrically connecting members, whereby the substantially planar substrate is secured to the support member. The electrically connecting members may comprise bolts, pins or rivets. The bolts may suitably comprise brass, plated with gold, silver or nickel. The rivets may suitably comprise brass or copper, plated with gold, silver or nickel.

The thermal insulation means may be provided interposed between the elongate substantially planar substrate and the elongate support member over substantially the full length of the substrate or substantially only at a region thereof where the temperature-sensitive electrical resistance element is provided. When the thermal insulation means is provided substantially only at the region where the temperature-sensitive electrical resistance element is provided, at least one slot means may be provided extending through and partly across the substrate, whereby thermal conduction along the substrate is reduced.

A metal mounting bracket may be provided, having a first portion thereof secured to the first end of the elongate support member, externally of the heater and a second portion thereof adapted to be secured to an external region of a heater of an electrical heating arrangement, such as to an external region at the peripheral wall of the heater.

The first portion of the mounting bracket may be arranged with clip means engaging portions of the first end of the elongate support member, which may be provided as recesses or rebates in the elongate support member. The recesses or rebates may be dimensioned to allow longitudinal adjustment of the elongate support member on the first portion of the mounting bracket.

The mounting bracket may be adapted and arranged to bias the elongate support member towards the lower surface of a cooking plate of an electrical heating arrangement.

For this purpose, the mounting bracket may be of cantilevered form, formed from a single sheet or strip of metal and arranged such that, when fitted to the heater, the second end of the elongate support member is biased upwardly towards the lower surface of the cooking plate.

Alternatively, the mounting bracket may have the first and second portions formed separately, to provide upper and lower components respectively, and assembled together such that limited relative displacement in a substantially vertical plane is permitted therebetween, spring means, such as of coil spring or leaf spring form, being provided intermediate the relatively-displaceable first and second portions and acting to urge the elongate support member towards the lower surface of the cooking plate.

The mounting bracket may comprise stainless steel, plated mild steel, or a high temperature resistant plastics material.

A temperature-responsive means may additionally be provided having a rod-like or beam-like portion adapted to extend at least partly across the heater from a peripheral region of the heater and adapted to monitor temperature in a cavity formed between the at least one electric heating element and the lower surface of the cooking plate. The temperature-responsive means may be arranged to cooperate with external control circuitry for de-energising the at least one electric heating element at a predetermined temperature and/or for controlling the temperature in the cavity within selected predetermined limits.

The temperature-responsive means may be arranged with the rod-like or beam-like portion thereof extending at least partly across the heater at a location substantially underlying the elongate support member of the temperature sensor assembly and may share the mounting bracket provided for the elongate support member of the temperature sensor assembly.

The support member may have a second surface thereof provided with a layer of thermal radiation-reflecting material.

An electrically insulating or passivation layer may be provided on the first surface of the substantially planar ceramic substrate at least overlying the temperature-sensitive electrical resistance element.

The temperature-sensitive electrical resistance element may comprise platinum.

According to another aspect of the present invention there is provided an electrical heating arrangement comprising: a cooking plate having an upper surface for receiving a cooking utensil, and a lower surface; an electric heater incorporating at least one electric heating element, the heater being supported in contact with the lower surface of the cooking plate; and a temperature sensor assembly as hereinbefore defined, the temperature sensor assembly being located in the electrical heating arrangement spaced above the at least one electric heating element in contact with the lower surface of the cooking plate and with the temperature-sensitive electrical resistance element facing the lower surface of the cooking plate.

The cooking plate may comprise glass-ceramic material.

The elongate support member may traverse an aperture or recess provided in a peripheral wall of the electric heater such that the first end of the elongate support member is located externally of the heater. The elongate support member may be provided with a transverse recess extending across a lower surface thereof in a location where the elongate support member traverses the aperture or recess in the peripheral wall of the heater, whereby the size of the aperture or recess in the peripheral wall is able to be minimised. The peripheral wall may comprise or include thermal insulation material.

The substantially planar substrate may also traverse, on the elongate support member, the aperture or recess provided in the peripheral wall of the electric heater, such that the second end region of the substrate is located externally of the heater.

The at least one electric heating element may comprise a radiant electrical resistance heating element or an electrical induction heating element.

By means of the present invention, a temperature sensor assembly is provided, incorporating thermal insulation means and which is compact, robust, sensitive and efficient in operation.

For a better understanding of the present invention and to show more clearly how it may be carried into effect, reference will now be made, by way of example, to the accompanying drawings in which:
Figure 1 is a plan view of an electrical heating arrangement provided with a temperature sensor assembly according to the present invention;
Figure 2 is a cross-sectional view of the arrangement of Figure 1;
Figure 3A is a perspective view of an embodiment of temperature sensor assembly of the present invention for use in the arrangement of Figures 1 and 2;
Figure 3B is an exploded view of the temperature sensor assembly of Figure 3A;
Figure 4A is a perspective view of another embodiment of temperature sensor assembly of the present invention for use in the arrangement of Figures 1 and 2;
Figure 4B is an exploded view of the temperature sensor assembly of Figure 4A;
Figure 5A is a perspective view of a further embodiment of temperature sensor assembly of the present invention for use in the arrangement of Figures 1 and 2;
Figure 5B is an exploded view of the temperature sensor assembly of Figure 5A;
Figure 6A is a perspective view of a still further embodiment of temperature sensor assembly of the present invention for use in the arrangement of Figures 1 and 2;
Figure 6B is a view from below of the temperature sensor assembly of Figure 6A;
Figure 6C is a cross-sectional view of the temperature sensor assembly of Figure 6A;
Figure 6D is a side view of the temperature sensor assembly of Figure 6A;
Figure 6E is an exploded view of the temperature sensor assembly of Figure 6A; and
Figure 7 is a perspective view of yet another embodiment of temperature sensor assembly of the present invention for use in the arrangement of Figures 1 and 2.

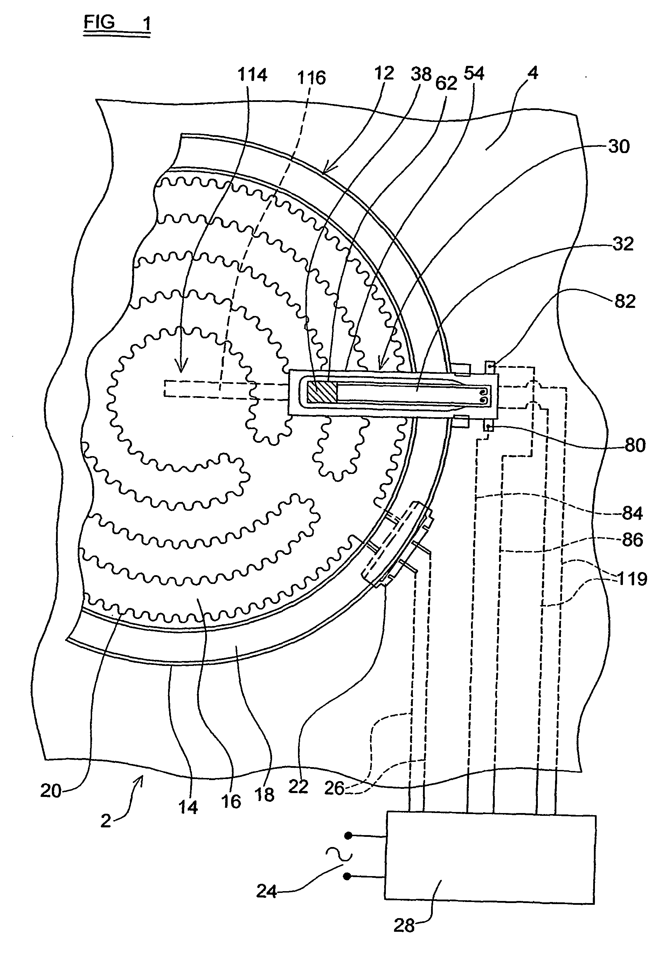

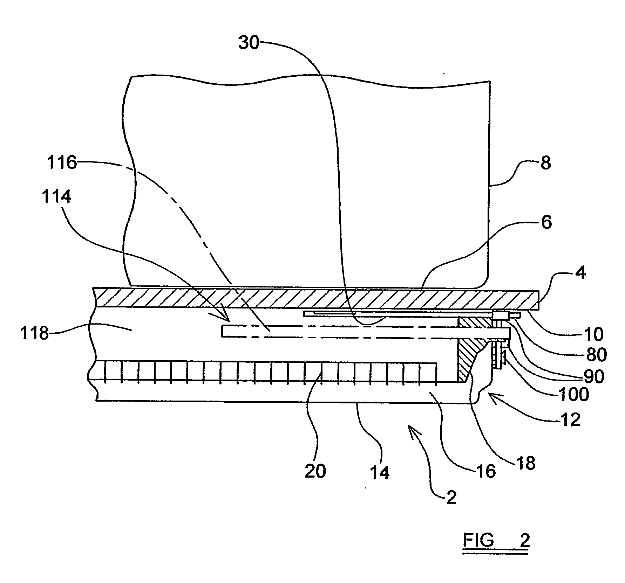

Referring to Figures 1 and 2, an electrical heating arrangement 2 comprises a glass-ceramic cooking plate 4 of well-known form, having an upper surface 6 for receiving a cooking utensil 8, such as a pan. A lower surface 10 of the cooking plate 4 has an electric heater 12 supported in contact therewith. The electric heater 12 comprises a dish-like support 14, such as of metal, in which is provided a base layer 16 of thermal and electrical insulation material, such as microporous thermal and electrical insulation material. A peripheral wall 18 of thermal insulation material is arranged to contact the lower surface 10 of the cooking plate 4.

At least one radiant electrical resistance heating element 20 is supported relative to the base layer 16. The heating element or elements can comprise any of the well-known forms of heating element, such as wire, ribbon, foil or lamp forms, or combinations thereof. In particular, the heating element or elements 20 can be of corrugated ribbon form, supported edgewise on the base layer 16 of insulation material.

It is to be understood, however, that the present invention is not limited to a heater incorporating at least one radiant electrical resistance heating element 20. Instead of the radiant electrical resistance heating element or elements, at least one electrical induction heating element could be provided.

A terminal block 22 is provided at an edge region of the heater 12, for connecting the heating element or elements 20 to a power supply 24 by way of leads 26 and through a control means 28, which may be a microprocessor-based control arrangement.

The cooking utensil 8 is heated by the heating element or elements 20 and its temperature is monitored by a temperature sensor assembly 30, which will be described in detail hereinafter, and which is located in contact with the lower surface 10 of the cooking plate 4. In particular, the temperature sensor assembly 30 is adapted to measure small increases in temperature of the cooking utensil 8 through the cooking plate 4 resulting, for example, from a boil-dry event occurring in the cooking utensil 8.

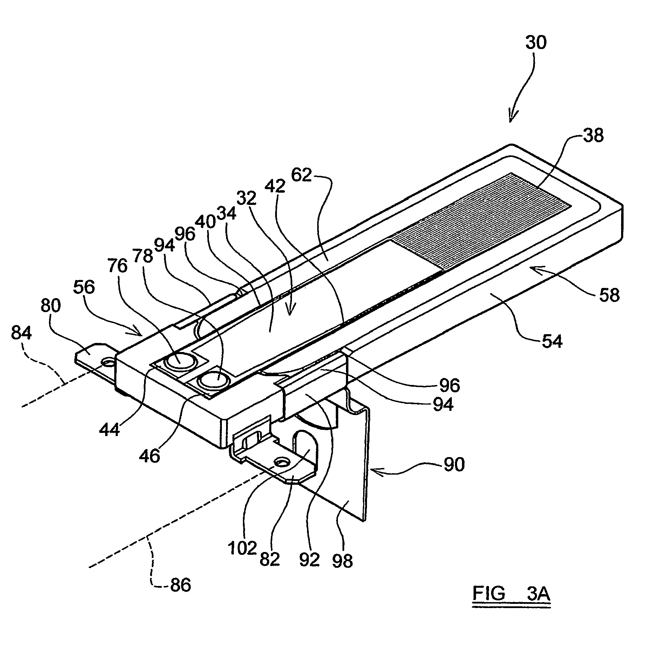

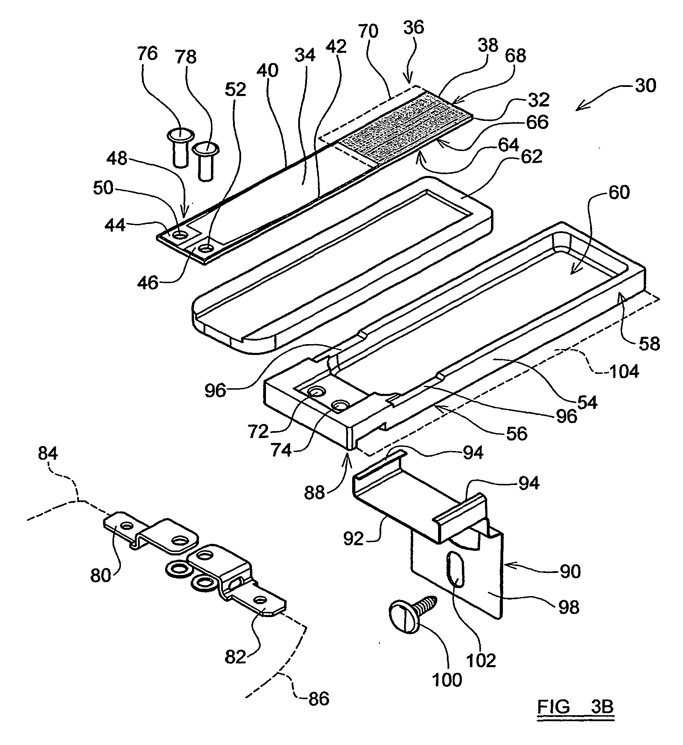

Referring to Figures 3A and 3B, the temperature sensor assembly 30 comprises a substantially planar thin elongate substrate 32, such as of ceramic or other electrically insulating material, having an upper surface 34 and provided at a first end region 36 thereof with a temperature-sensitive electrical resistance element 38 of film form and suitably comprising platinum. The resistance element 38 may be deposited onto the surface 34 of the substrate 32 by a thick film printing technique, although other deposition techniques may be applied. The ceramic substrate 32 suitably has a thickness of between about 0.5 and 1 mm and suitably comprises alumina. A suitable electrical resistance value for the temperature-sensitive electrical resistance element is between about 50 and about 1000 ohms at 0 degrees Celsius, and preferably between about 100 and about 500 ohms.

Electrical connecting leads 40, 42, also of film form, are provided on the upper surface 34 of the substrate 32 and are electrically connected to the temperature-sensitive electrical resistance element 38. The electrical connecting leads 40, 42 suitably comprise the same or similar material as the electrical resistance element 38 and extend to terminal pads 44, 46 provided at a second end region 48 of the substrate 32. The terminal pads 44, 46 may comprise substantially the same or similar material as the electrical connecting leads 40, 42 or may comprise a different material, such as gold.

Holes 50, 52 are provided through the pads 44, 46 and through the substrate 32.

An elongate support member 54, arranged as a beam, is adapted to extend at least partly across the heater 12 from a peripheral region of the heater, across an aperture or recess in the peripheral wall 18 and a rim of the dish-like support 14, with a first end 56 of the support member 54 secured externally of the heater at the peripheral region of the heater and with a second end 58 thereof located within the heater. The support member 54 suitably comprises a ceramic material, such as steatite, cordierite or alumina, and is provided with an elongate recess 60 into which is received the substrate 32. The temperature-sensitive electrical resistance element 38 is located at or near the second end 58 of the support member 54 within the heater 12 and the terminal pads 44, 46 are located externally of the heater, at the first end 56 of the support member, where they are subjected to a relatively low temperature.

Thermal insulation means 62 is provided in the recess 60 in the support member 54, interposed between the support member 54 and a lower surface 64 and side edges 66, 68 of the substrate 32. The thermal insulation means 62 preferably comprises a thin layer of microporous thermal insulation material, suitably of a thickness between 1 and 4 mm and preferably between 2 and 3 mm. Alternatively or additionally, the thermal insulation means 62 could comprise granular thermal insulation material, such as vermiculite or calcium silicate.

The substrate 32 and thermal insulation means 62 may be press-moulded into the recess 60 in the support member 54, such that the upper surface 34 of the substrate 32 is substantially planar with that of the support member 54.

An electrically insulating or passivation layer 70 may be provided on the upper surface 34 of the ceramic substrate 32, at least overlying the temperature-sensitive electrical resistance element 38. The passivation layer may also provide improved abrasion resistance.

Holes 72, 74 are provided through the support member 54 at the first end 56 thereof. The holes 72, 74 are aligned with the holes 50, 52 in the ceramic substrate 32 and are arranged to receive electrically connecting members 76, 78, suitably comprising bolts, pins or rivets, for electrically connecting the terminal pads 44, 46 to terminal tabs or pins 80, 82 and for mechanically securing the ceramic substrate 32 to the support member 54. The terminal tabs or pins 80, 82 are arranged for electrically connecting the temperature-sensitive electrical resistance element 38 to the control arrangement 28 by means of leads 84, 86. When the electrically connecting members 76, 78 comprise bolts, such bolts suitably comprise brass, plated with silver or nickel. When the electrically connecting members 76, 78 comprise rivets, such rivets suitably comprise copper, plated with gold.

The terminal tabs or pins 80, 82 are arranged to extend laterally at the first end 56 of the support member 54 and from a lower surface 88 of the support member 54, whereby adequate clearance is provided between the terminal tabs or pins 80, 82 and the lower surface of the cooking plate 4.

A metal mounting bracket 90 is provided for the temperature sensor assembly. The mounting bracket 90 suitably comprises stainless steel and has a first portion 92 arranged with clip means 94 securely engaging portions 96 of the first end 56 of the support member 54. The engaging portions 96 are suitably provided as recesses or rebates in the support member 54. The mounting bracket 90 has a second portion 98 secured to the rim of the dish-like support 14 of the heater 12 by means of a threaded fastener 100 passing through a hole 102 in the second portion 98 of the mounting bracket 90. The mounting bracket 90 is provided of cantilevered form from a single bent sheet or strip of metal and such that the second end 58 of the support member 54 is spring-biased towards the lower surface 10 of the cooking plate 4. In this way, the upper surface of the temperature sensor assembly 30 is maintained substantially in contact with the lower surface 10 of the cooking plate 4.

The external lower surface 88 of the support member 54 may be provided with a layer 104 of thermal radiation-reflecting material to reflect incident thermal radiation from the heating element or elements 20.

The resulting temperature sensor assembly 30 is compact and sensitive and with the thermal insulation means well protected therein. In the heating arrangement 2, it is able to monitor small increases in temperature in the cooking plate 4 and the cooking utensil 8, resulting for example from a boil-dry event in the cooking utensil 8, without problems of interference from thermal "noise" resulting from fluctuations of a set-point temperature selected for operation of the heater 12. The temperature sensor assembly 30 is therefore able to operate rapidly and efficiently, in cooperation with the control means 28, to de-energise the heating element or elements 20 when a problem such as a boil-dry event occurs.

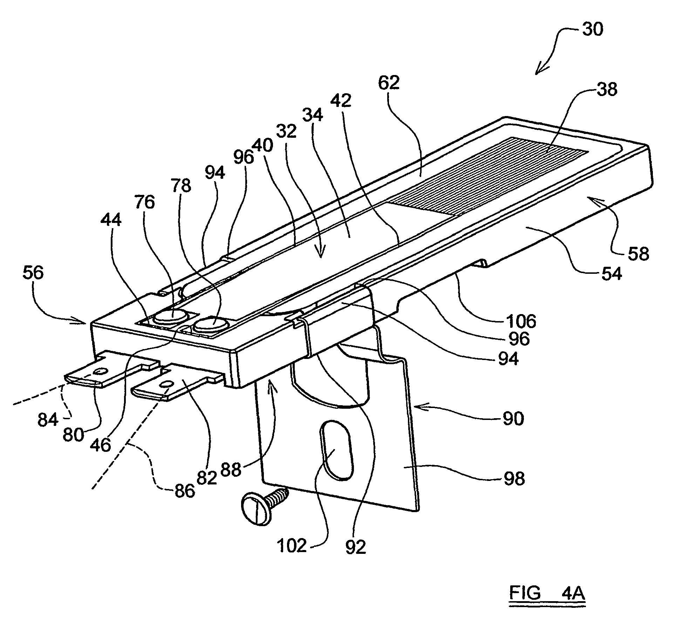

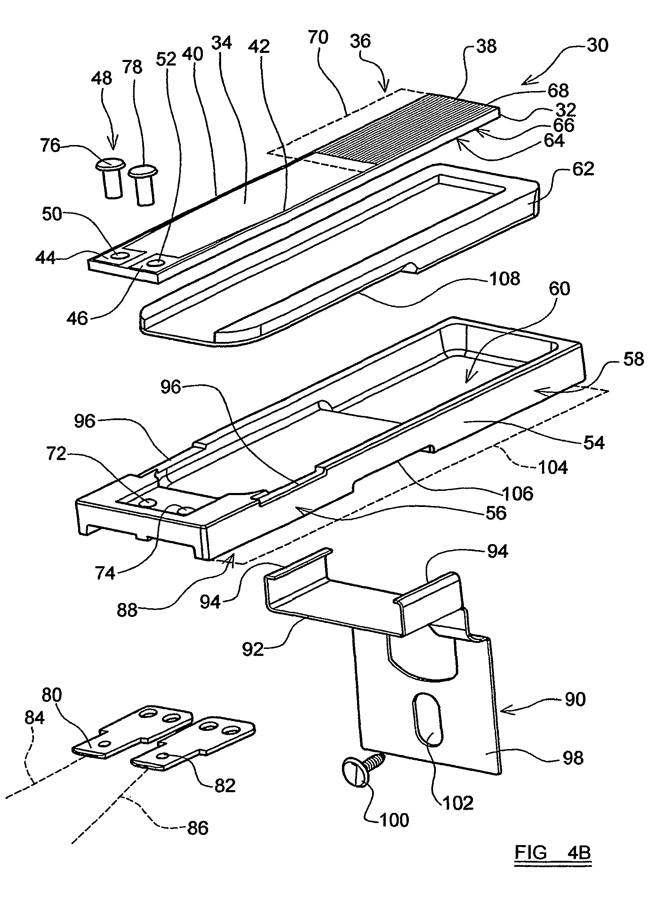

Figures 4A and 4B illustrate another embodiment of the temperature sensor assembly 30, which is substantially the same as the temperature sensor assembly 30 of Figures 3A and 3B, with the following exceptions. Firstly, the elongate support member 54 is provided with a transverse recess 106 extending across the lower surface 88 thereof in a location where the support member 54 traverses the aperture or recess in the peripheral wall 18 of the heater 12. The size of the aperture or recess in the peripheral wall 18 is thereby able to be minimised, thus ensuring that the maximum possible depth of the peripheral wall 18 is maintained. With this arrangement, it is necessary for the thermal insulation means 62 to be provided of reduced thickness in a region 108 thereof overlying the transverse recess 106. Secondly, the terminal tabs or pins 80, 82 are arranged to extend longitudinally, rather than laterally at the first end 56 of the support member 54. This arrangement of the terminal pads or pins could, of course, be provided as an alternative in the embodiment of Figures 3A and 3B.

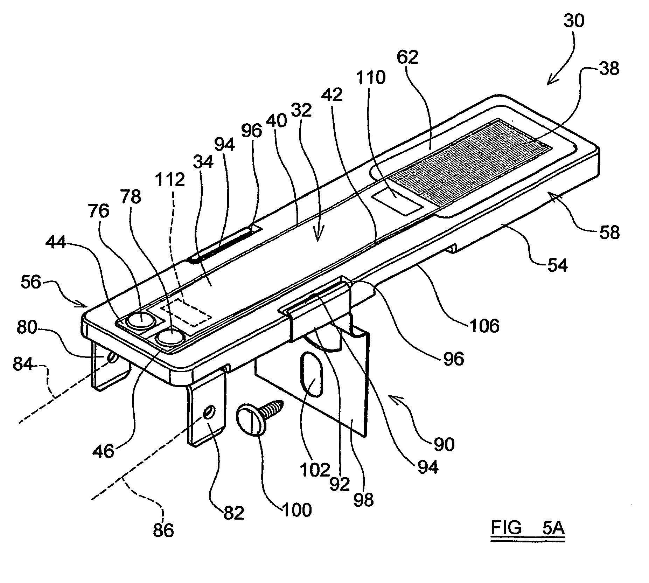

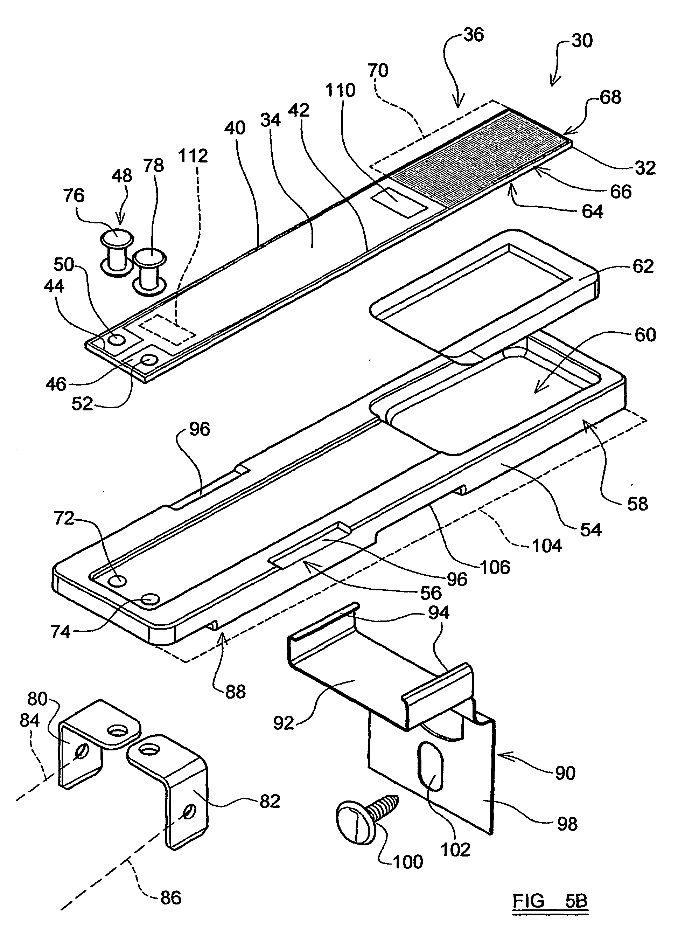

Figures 5A and 5B illustrate a further embodiment of the temperature sensor assembly 30 which is a modification of the embodiment of Figures 4A and 4B. Here the thermal insulation means 62 is provided substantially only at the region where the temperature-sensitive electrical resistance element 38 is arranged. In order to maintain efficiency of operation of the assembly, such that thermal conduction effects along the ceramic substrate 32 are minimised or reduced, a slot 110 is provided extending through and partly across the ceramic substrate 32 in the vicinity of a region where the electrical connecting leads 40, 42 extend from the temperature-sensitive electrical resistance element 38. A further slot 112 may be provided near the terminal pads 44, 46.

A further arrangement of the terminal tabs or pins 80, 82 is shown in Figures 5A and 5B. Here the terminal tabs or pins 80, 82 extend downwardly at the first end 56 of the support member 54. This further arrangement is also applicable to the embodiments of Figures 3A and 4A.

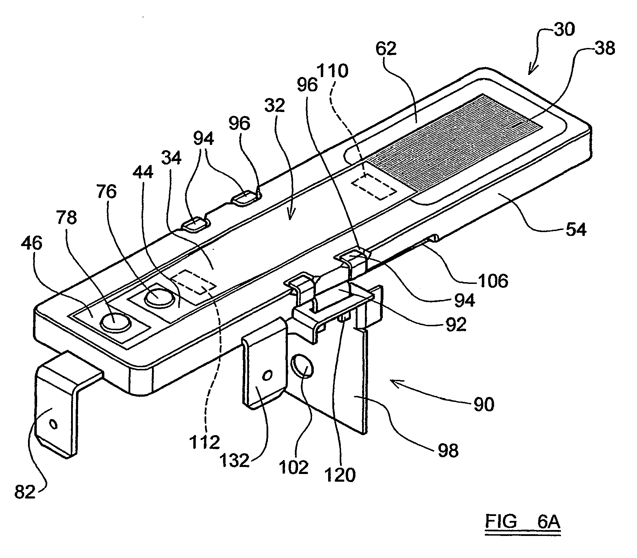

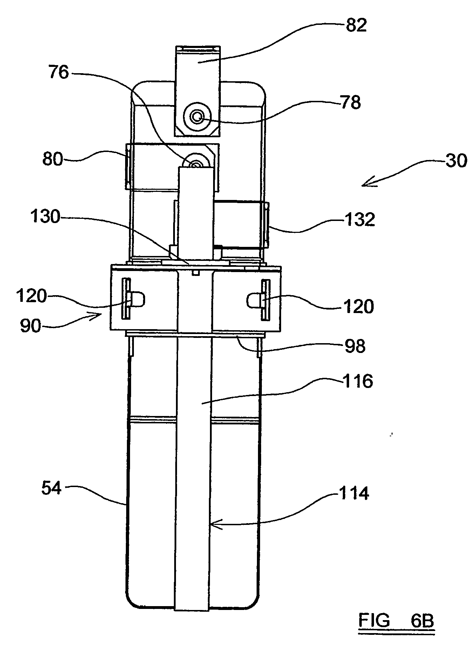

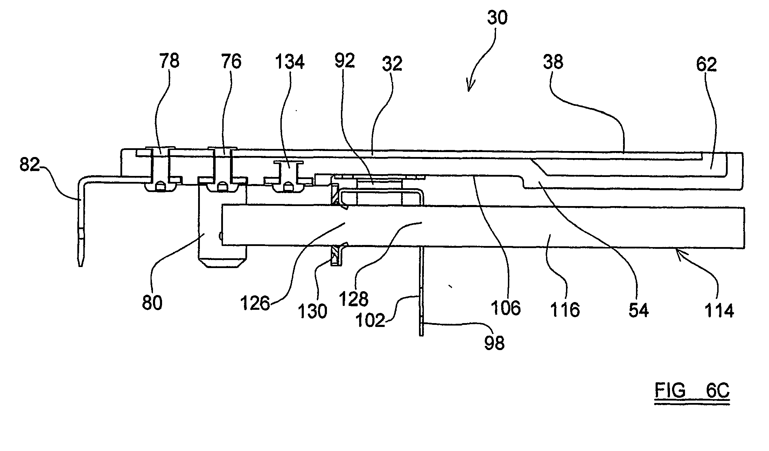

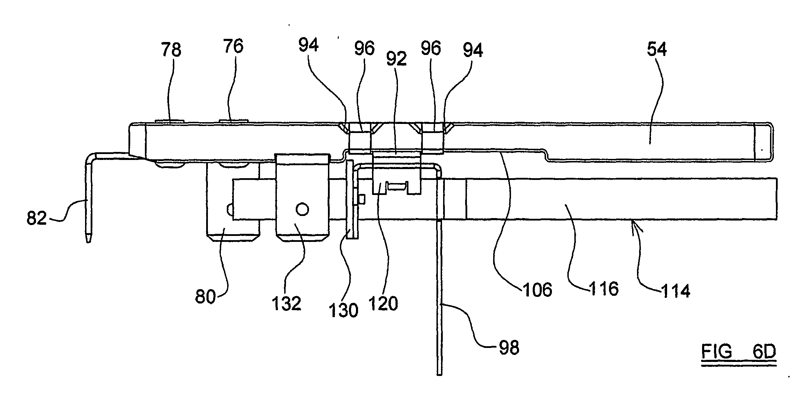

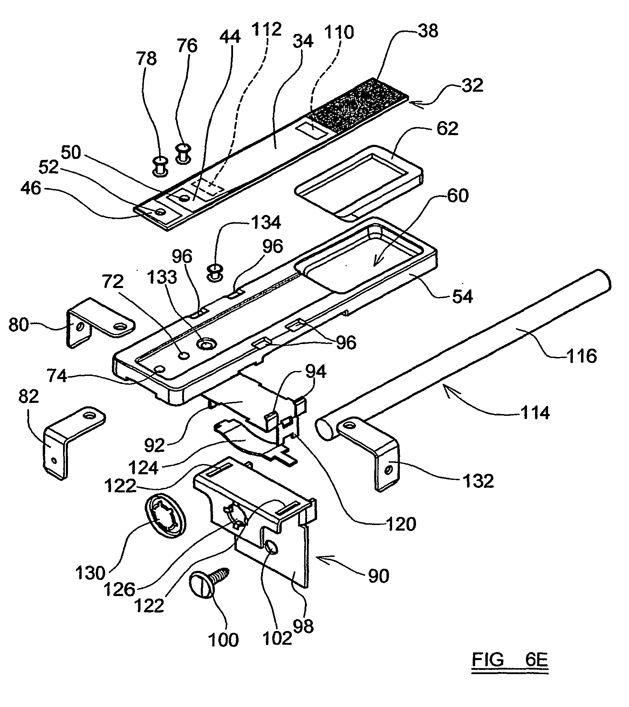

Figures 6A to 6E illustrate another embodiment of the temperature sensor assembly 30, which is similar to that shown in Figures 5A and 5B with the main exceptions that a different form of spring-biased mounting bracket 90 is provided, the mounting bracket being also adapted to support an additional temperature-responsive device 114 having a rod-like or beam-like sensing portion 116 adapted to extend beneath the elongate support beam 54 at least partly across the heater 12 from a peripheral region of the heater and adapted to monitor temperature in a cavity 118 of the heater formed between the heating element or elements 20 and the lower surface 10 of the cooking plate 4. Such temperature-responsive device 114 may be arranged to be electrically connected to and to cooperate with the control means 28, by way of connecting leads 119 (Figure 1), for de-energising the heating element or elements 20 at a predetermined (variable) temperature and/or for controlling the temperature in the cavity 118 at a selected set point within predetermined limits. The temperature-responsive device 114 may be an electro-mechanical device of known form or an electronic probe incorporating a temperature-sensitive electrical resistance element.

Referring to Figures 6A to 6E in more detail, the metal mounting bracket 90, suitably of stainless steel, has a first portion 92 forming an upper component and secured to the elongate support member 54 by means of clips 94 which engage portions 96 of the support member provided as recesses or rebates in the support member 54. The mounting bracket 90 has a second portion 98 forming a lower component and arranged for securing to the rim of the dish-like support 14 of the heater 12 by means of a threaded fastener 100 passing through a hole 102 in the second portion 98 of the mounting bracket. The first and second portions 92, 98 are assembled together by a retaining tab 120 and slot 122 arrangement, such that limited relative displacement in a substantially vertical plane (i.e., perpendicular to the plane of the slot) is permitted therebetween. A leaf spring arrangement 124 (which could be substituted by a coil spring arrangement) is provided intermediate the relatively-displaceable first and second portions 92, 98 and acts to urge the elongate support member 54 towards the lower surface 10 of the cooking plate 4. The second portion 98 is provided with aligned apertures 126, 128 therethrough for receiving the rod-like or beam-like portion 116 of the temperature-responsive device 114, which is retained therein by clip means 130.

In addition to the terminal tabs or pins 80, 82 provided for electrical connection of the temperature-sensitive electrical resistance element 38, as in Figures 3 to 5, a third terminal tab or pin 132 may be provided secured to the support member 54, through a hole 133, by means such as a rivet 134 and can be used to simplify connection of the temperature-responsive device 114 and the temperature-sensitive electrical resistance element 38 to the control means 28.

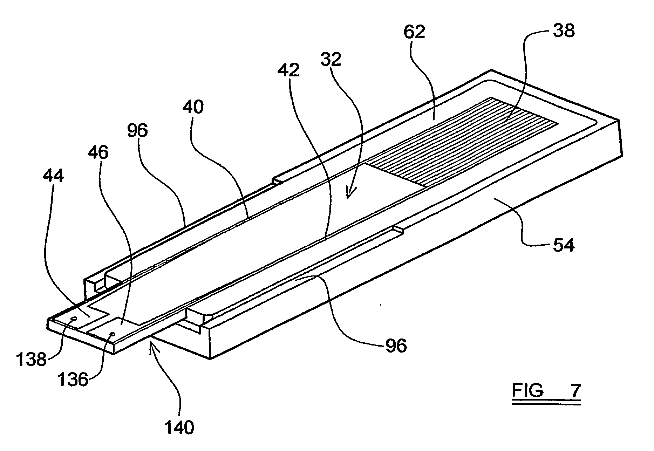

Referring again to Figures 3A and 3B, instead of providing holes 50, 52 through the terminal pads 44, 46 and substrate 32, and holes 72, 74 through the support member 54, for receiving the electrically connecting members 76, 78 connected to the tabs or pins 80, 82, the pads 44, 46 could simply be arranged as shown in Figure 7 with external lead wires 136, 138 connected thereto by means of high temperature solder or by brazing or welding. Such connections may be facilitated by arranging for end region 140 of the ceramic substrate 32 to extend beyond the end of the support member 54.

Furthermore, by providing the recesses or rebates 96 of extended length in the support member 54, as shown in Figure 7, the mounting bracket 90 of Figures 3 to 6 may be applied and its position adjusted, as required, along a predetermined length of the support member 54.

The temperature sensor assembly can be used in heaters having more than one heating zone, the heating zones for example being separated by a dividing wall. In such a case, more than one temperature-sensitive electrical resistance element can be provided on the substrate and the assembly will be constructed such that the multiple temperature-sensitive elements fall in use into different heating zones.

## Claims

1. A temperature sensor assembly for an electrical heating arrangement (2), the temperature sensor assembly being **characterised by**: a thin substantially planar substrate (32) having a first, exposed surface (34) provided with a temperature-sensitive electrical resistance element (38) of film form, and a second surface (64), the temperature-sensitive electrical resistance element being provided with electrical connecting leads (40, 42); a support member (54) having a first surface adapted to receive the substantially planar substrate (32) with the second surface (64) of the substrate juxtaposed therewith; and thermal insulation means (62) interposed between at least the second surface (64) of the substantially planar substrate and the support member at least at a region where the temperature-sensitive electrical resistance element (38) is provided.

2. An assembly as claimed in claim 1, **characterised in that** the support member (54) has a recess (60) provided in its first surface, the recess being adapted and arranged to receive the substantially planar substrate (32) and the thermal insulation means (62).

3. An assembly as claimed in claim 2, **characterised in that** the thermal insulation means (62) is additionally interposed between the support member (54) and one or more side edges (66, 68) of the substantially planar substrate (32) in the recess (60).

4. An assembly as claimed in any preceding claim, **characterised in that** the thermal insulation means (62) comprises a thin layer of microporous thermal insulation material and/or alternative thermal insulation material.

5. An assembly as claimed in claim 4, **characterised in that** the alternative thermal insulation material (62) is selected from vermiculite, perlite, mineral fibres, calcium silicate and inorganic foam, and mixtures thereof.

6. An assembly as claimed in any preceding claim, **characterised in that** the thermal insulation means (62) is provided with a thickness thereof of from 1 to 10 mm, preferably a thickness of from 2 to 4 mm, between the substantially planar substrate (32) and the support member (54).

7. An assembly as claimed in any preceding claim, **characterised in that** the support member (54) comprises a ceramic material, for example selected from steatite, cordierite and alumina.

8. An assembly as claimed in any one of claims 1 to 6, **characterised in that** the support member (54) comprises a metal, for example stainless steel.

9. An assembly as claimed in any preceding claim, **characterised in that** the substantially planar substrate (32) is selected from a ceramic material, for example selected from a ceramic comprising 85-99 weight percent alumina, glass ceramic and aluminium nitride, and a metallic material having a dielectric coating.

10. An assembly as claimed in any preceding claim, **characterised in that** the substantially planar substrate (32) has a thickness from about 0.25 mm to about 3 mm, preferably a thickness from about 0.5 mm to about 1 mm.

11. An assembly as claimed in any preceding claim, **characterised in that** the support member (54) is of elongate form arranged as a beam and adapted to extend at least partly across a heater (12) of an electrical heating arrangement, the beam being adapted to extend from a peripheral region of the heater, for example the support member (54) of elongate form has a first end (56) thereof adapted to be secured at the peripheral region of the heater (12) and a second end (58) thereof adapted to be within the heater, the temperature-sensitive electrical resistance element (38) being located at or near the second end thereof, with the electrical connecting leads (40, 42) extending from the temperature-sensitive electrical resistance element to the first end of the support member.

12. An assembly as claimed in claim 11, **characterised in that** the substantially planar substrate (32) is of elongate form, extending along the elongate support member (54) and having the temperature-sensitive electrical resistance element (38) located at a first end region (36) thereof and with the electrical connecting leads (40, 42) being provided of film form on the substrate and extending to a second end region (48) thereof located at the first end (56) of the support member, for example the film-form electrical connecting leads (40, 42) comprise substantially the same or similar material as the temperature-sensitive electrical resistance element (38).

13. An assembly as claimed in claim 12, **characterised in that** electric terminal means (44, 46), for example comprising electrically conductive pads, for the film-form electrical connecting leads (40, 42) are provided at the second end region (48) of the substantially planar substrate (32).

14. An assembly as claimed in claim 13, **characterised in that** the electrically conductive pads (44, 46) comprise substantially the same or similar material as the electrical connecting leads (40, 42), or a different material, for example comprising gold.

15. An assembly as claimed in claim 13 or 14, **characterised in that** external connecting leads (136, 138) are arranged to be connected to the electric terminal means (44, 46), for example by soldering, brazing or welding.

16. An assembly as claimed in any of claims 13 to 15, **characterised in that** holes (50, 52) are provided through the pads (44, 46) and through the substantially planar substrate (32), for receiving electrically connecting members (76, 78), for example the electrically connecting members (76, 78) having electrically conductive terminal tabs or pins (44, 46) associated therewith for connection to external circuitry (84, 86).

17. An assembly as claimed in claim 16, **characterised in that** the holes (72, 74) are also provided through an underlying region of the support member (54) and arranged to receive the electrically connecting members (38), whereby the substantially planar substrate (32) is secured to the support member.

18. An assembly as claimed in claim 16 or 17, **characterised in that** the electrically connecting members (76, 78) comprise bolts, for example bolts comprising brass, plated with gold, silver or nickel, pins or rivets, for example rivets comprising brass or copper, plated with gold, silver or nickel.

19. An assembly as claimed in any of claims 12 to 18, **characterised in that** the thermal insulation means (62) is provided interposed between the elongate substantially planar substrate (32) and the elongate support member (54) over substantially the full length of the substrate or substantially only at a region thereof where the temperature-sensitive electrical resistance element (38) is provided.

20. An assembly as claimed in claim 19, **characterised in that** the thermal insulation means (62) is provided substantially only at the region where the temperature-sensitive electrical resistance element (38) is provided.

21. An assembly as claimed in claim 19 or 20, **characterised in that** at least one slot means (110, 112) is provided extending through and partly across the substrate (32), whereby thermal conduction along the substrate is reduced.

22. An assembly as claimed in any preceding claim, **characterised in that** a metal mounting bracket (90) is provided, having a first portion (92) thereof secured to the first end (56) of the elongate support member (54), adapted to be secured externally of a heater (12) of an electrical heating arrangement, and a second portion (98) thereof for securing to an external region of the heater, for example the second portion being adapted to be secured to an external region at a peripheral wall (18) of the heater (12).

23. An assembly as claimed in claim 22, **characterised in that** the first portion (92) of the mounting bracket (90) is arranged with clip means (94) engaging portions of the first end (56) of the elongate support member (54), for example engaged portions of the first end (56) of the elongate support member (54) provided as recesses or rebates in the elongate support member, preferably the recesses or rebates being dimensioned to allow longitudinal adjustment of the elongate support member (54) on the first portion (92) of the mounting bracket (90).

24. An assembly as claimed in claim 22 or 23, **characterised in that** the mounting bracket (90) is adapted and arranged to bias the elongate support member (54) towards the lower surface (10) of a cooking plate (4) of an electrical heating arrangement, for example the mounting bracket (90) is of cantilevered form, formed from a single sheet or strip of metal and arranged, such that, when fitted to the heater (12), the second end (58) of the elongate support member (54) is biased upwardly towards the lower surface (10) of the cooking plate (4).

25. An assembly as claimed in claim 24, **characterised in that** the mounting bracket (90) has the first and second portions (92, 98) formed separately, to provide upper and lower components respectively, and assembled together such that limited relative displacement in a substantially vertical plane is permitted therebetween, spring means (124), for example of coil spring or leaf spring form, being provided intermediate the relatively-displaceable first and second portions and acting to urge the elongate support member (54) towards the lower surface (10) of the cooking plate (4).

26. An assembly as claimed in any one of claims 22 to 25, **characterised in that** the mounting bracket (90) comprises stainless steel, plated mild steel or a high temperature resistant plastics material.

27. An assembly as claimed in any preceding claim, **characterised in that** a temperature-responsive means (114) is additionally provided having a rod-like or beam-like portion.

28. An assembly as claimed in claim 27, as dependant upon claim 11, **characterised in that** the temperature-responsive means (114) is arranged with the rod-like or beam-like portion at a location substantially underlying the elongate support member (54) of the temperature sensor assembly.

29. An assembly as claimed in claim 28, as dependant upon any of claims 22 to 26, **characterised in that** the temperature-responsive means (114) shares the mounting bracket (90) provided for the elongate support member (54) of the temperature sensor assembly.

30. An assembly as claimed in any preceding claim, **characterised in that** the support member (54) has a second surface (88) thereof provided with a layer (104) of thermal radiation-reflecting material.

31. An assembly as claimed in any preceding claim, **characterised in that** the temperature-sensitive electrical resistance element (38) comprises platinum.

32. An electrical heating arrangement comprising: a cooking plate (4), for example comprising glass-ceramic material, having an upper surface (6) for receiving a cooking utensil (8), and a lower surface (10); an electric heater (12) incorporating at least one electric heating element (20), the heater being supported in contact with the lower surface of the cooking plate; and a temperature sensor assembly (30) as claimed in any preceding claim, the temperature sensor assembly being located in the electrical heating arrangement (2) spaced above the at least one electric heating element in contact with the lower surface of the cooking plate and with the temperature-sensitive electrical resistance element (38) facing the lower surface of the cooking plate.

33. An arrangement as claimed in claim 32, **characterised in that** the elongate support member (54) traverses an aperture or recess provided in a peripheral wall (18) of the electric heater (12) and such that the first end (56) of the elongate support member (54) is located externally of the heater, for example the elongate support member (54) is provided with a transverse recess extending across a lower surface thereof in a location where the elongate support member traverses the aperture or recess in the peripheral wall (18) of the heater, whereby the size of the aperture or recess in the peripheral wall is able to be minimised.

34. An arrangement as claimed in claim 33, **characterised in that** the peripheral wall (18) comprises or includes thermal insulation material.

35. An arrangement as claimed in claim 33 or 34, **characterised in that** the substantially planar substrate (32) also traverses, on the elongate support member (54), the aperture or recess provided in the peripheral wall (18) of the electric heater (12), such that the second end region (48) of the substrate is located externally of the heater.

36. An arrangement as claimed in any one of claims 32 to 35, **characterised in that** the at least one electric heating element (20) comprises a radiant electrical resistance heating element or an electrical induction heating element.

## Patentansprüche

1. Temperatursensorbaugruppe für eine elektrische Heizanordnung (2), wobei die Temperatursensorbaugruppe **gekennzeichnet ist durch**: ein dünnes, im Wesentlichen planares Substrat (32) mit einer ersten, exponierten Fläche (34), die mit einem temperaturempfindlichen elektrischen Widerstandselement (38) in Folienform versehen ist, und einer zweiten Fläche (34), wobei das temperaturempfindliche elektrische Widerstandselement mit elektrischen Verbindungsleitungen (40, 42) versehen ist; wobei ein Trägerelement (54) eine erste Fläche zum Aufnehmen des im Wesentlichen planaren Substrats (32) mit der zweiten Fläche (64) des Substrats daneben liegend aufweist; und Wärmeisolationsmittel (62) zwischen wenigstens der zweiten Fläche (64) des im Wesentlichen planaren Substrats und dem Trägerelement wenigstens in einer Region, in der das temperaturempfindliche elektrische Widerstandselement (38) vorgesehen ist.

2. Baugruppe nach Anspruch 1, **dadurch gekennzeichnet, dass** das Trägerelement (54) eine in seiner ersten Fläche vorgesehene Aussparung (60) aufweist, wobei die Aussparung so gestaltet und angeordnet ist, dass sie das im Wesentlichen planare Substrat (32) und das Wärmeisolationsmittel (62) aufnimmt.

3. Baugruppe nach Anspruch 2, **dadurch gekennzeichnet, dass** das Wärmeisolationsmittel (62) zusätzlich zwischen dem Trägerelement (54) und einem oder mehreren Seitenrändern (66, 68) des im Wesentlichen planaren Substrats (32) in der Aussparung (60) angeordnet ist.

4. Baugruppe nach einem der vorherigen Ansprüche, **dadurch gekennzeichnet, dass** das Wärmeisolationsmittel (62) eine dünne Schicht aus mikroporösem Wärmeisolationsmaterial und/oder alternativem Wärmeisolationsmaterial umfasst.

5. Baugruppe nach Anspruch 4, **dadurch gekennzeichnet, dass** das alternative Wärmeisolationsmaterial (62) aus Vermiculit, Perlit, Mineralfasern, Calciumsilicat und anorganischem Schaumstoff sowie Gemischen davon ausgewählt ist.

6. Baugruppe nach einem der vorherigen Ansprüche, **dadurch gekennzeichnet, dass** das Wärmeisolationsmittel (62) in einer Dicke von 1 bis 10 mm, vorzugsweise einer Dicke von 2 bis 4 mm, zwischen dem im Wesentlichen planaren Substrat (32) und dem Trägerelement (54) vorgesehen ist.

7. Baugruppe nach einem der vorherigen Ansprüche, **dadurch gekennzeichnet, dass** das Trägerelement (54) ein Keramikmaterial umfasst, das beispielsweise aus Steatit, Cordierit und Tonerde ausgewählt ist.

8. Baugruppe nach einem der Ansprüche 1 bis 6, **dadurch gekennzeichnet, dass** das Trägerelement (54) ein Metall wie z.B. rostfreien Stahl umfasst.

9. Baugruppe nach einem der vorherigen Ansprüche, **dadurch gekennzeichnet, dass** das im Wesentlichen planare Element (32) aus einem Keramikmaterial, z.B. ausgewählt aus einer Keramik, die 85-99 Gew.-% Tonerde, Glaskeramik und Aluminiumnitrid enthält, und einem metallischen Material mit einer dielektrischen Beschichtung ausgewählt ist.

10. Baugruppe nach einem der vorherigen Ansprüche, **dadurch gekennzeichnet, dass** das im Wesentlichen planare Substrat (32) eine Dicke von etwa 0,25 mm is etwa 3 mm, vorzugsweise eine Dicke von etwa 0,5 mm bis etwa 1 mm hat.

11. Baugruppe nach einem der vorherigen Ansprüche, **dadurch gekennzeichnet, dass** das Trägerelement (54) eine längliche Form hat, die als Balken ausgelegt und so gestaltet ist, dass sie wenigstens teilweise über eine Heizung (12) einer elektrischen Heizanordnung verläuft, wobei der Balken so gestaltet ist, dass er sich von einer peripheren Region der Heizung erstreckt, zum Beispiel ist ein erstes Ende (56) des länglich geformten Trägerelements (54) zum Befestigen an der peripheren Region der Heizung (12) gestaltet und ein zweites Ende (58) davon ist so gestaltet, dass es sich in der Heizung befindet, wobei sich das temperaturempfindliche elektrische Widerstandselement (38) an oder nahe dem zweiten Ende davon befindet, wobei sich die elektrischen Verbindungsleitungen (40, 42) von dem temperaturempfindlichen elektrischen Widerstandselement zum ersten Ende des Trägerelements erstrecken.

12. Baugruppe nach Anspruch 11, **dadurch gekennzeichnet, dass** das im Wesentlichen planare Substrat (32) eine längliche Form hat, entlang dem länglichen Trägerelement (54) verläuft und sein temperaturempfindliches elektrisches Widerstandselement (38) sich in einer ersten Endregion (36) davon befindet, wobei die elektrischen Verbindungsleitungen (40, 42) in Folienform auf dem Substrat vorgesehen sind und zu einer zweiten Endregion (48) davon verlaufen, die sich am ersten Ende (56) des Trägerelements befindet, zum Beispiel umfassen die folienförmigen elektrischen Verbindungsleitungen (40, 42) im Wesentlichen dasselbe oder ein ähnliches Material wie das temperaturempfindliche elektrische Widerstandselement (38).

13. Baugruppe nach Anspruch 12, **dadurch gekennzeichnet, dass** die elektrischen Anschlussmittel (44, 46), die z.B. elektrisch leitfähige Kontaktstellen umfassen, für die folienförmigen elektrischen Verbindungsleitungen (40, 42) an der zweiten Endregion (48) des im Wesentlichen planaren Substrats (32) versehen sind.

14. Baugruppe nach Anspruch 13, **dadurch gekennzeichnet, dass** die elektrisch leitenden Kontaktstellen (44, 46) im Wesentlichen dasselbe oder ein ähnliches Material wie die elektrischen Verbindungsleitungen (40, 42) oder ein anderes Material wie z.B. Gold umfassen.

15. Baugruppe nach Anspruch 13 oder 14, **dadurch gekennzeichnet, dass** externe Verbindungsleitungen (136, 138) für den Anschluss an das elektrische Anschlussmittel (44, 46) beispielsweise durch Löten, Hartlöten oder Schweißen angeordnet sind.

16. Baugruppe nach einem der Ansprüche 13 bis 15, **dadurch gekennzeichnet, dass** Löcher (50, 52) durch die Kontaktstellen (44, 46) und durch das im Wesentlichen planare Substrat (32) vorgesehen sind, um elektrische Verbindungselemente (76, 78), zum Beispiel die elektrischen Verbindungselemente (76, 78) mit elektrisch leitenden Anschlusslaschen oder -stiften (44, 46) aufzunehmen, die zum Verbinden mit einer externen Schaltung (84, 86) damit assoziiert sind.

17. Baugruppe nach Anspruch 16, **dadurch gekennzeichnet, dass** die Löcher (72, 74) auch durch eine darunter liegende Region des Trägerelements (54) vorgesehen und zum Aufnehmen der elektrischen Verbindungselemente (38) ausgelegt sind, so dass das im Wesentlichen planare Substrat (32) am Trägerelement befestigt wird.

18. Baugruppe nach Anspruch 16 oder 17, **dadurch gekennzeichnet, dass** die elektrischen Verbindungselemente (76, 78) Schraubbolzen, z.B. Messing umfassende Schraubbolzen, mit Gold, Silber oder Nickel überzogen, Bolzen oder Nieten, z.B. Messing oder Kupfer umfassende Nieten, mit Gold, Silber oder Nickel überzogen, umfassen.

19. Baugruppe nach einem der Ansprüche 12 bis 18, **dadurch gekennzeichnet, dass** das Wärmeisolationsmittel (62) zwischen dem länglichen, im Wesentlichen planaren Substrat (32) und dem länglichen Trägerelement (54) über im Wesentlichen die volle Länge des Substrats oder im Wesentlichen nur in einer Region davon vorgesehen sind, wo sich das temperaturempfindliche elektrische Widerstandselement (38) befindet.

20. Baugruppe nach Anspruch 19, **dadurch gekennzeichnet, dass** das Wärmeisolationsmittel (62) im Wesentlichen nur in der Region vorgesehen ist, wo sich das temperaturempfindliche elektrische Widerstandselement (38) befindet.

21. Baugruppe nach Anspruch 19 oder 20, **dadurch gekennzeichnet, dass** der wenigstens eine Schlitz (110, 112) so vorgesehen ist, dass er durch und teilweise über das Substrat (32) verläuft, so dass eine Wärmeleitung entlang dem Substrat reduziert wird.

22. Baugruppe nach einem der vorherigen Ansprüche, **dadurch gekennzeichnet, dass** eine metallische Montagehalterung (90) vorgesehen ist, von der ein erster Abschnitt (92) am ersten Ende (56) des länglichen Trägerelements (54) befestigt ist, zum externen Befestigen einer Heizung (12) einer elektrischen Heizanordnung, und von der ein zweiter Abschnitt (98) an einer externen Region der Heizung befestigt wird, wobei z.B. der zweite Abschnitt zum Befestigen an einer externen Region an einer peripheren Wand (18) der Heizung (12) ausgelegt ist.

23. Baugruppe nach Anspruch 22, **dadurch gekennzeichnet, dass** der erste Abschnitt (92) der Montagehalterung (90) mit Klemmmitteln (94) versehen ist, die in Abschnitte des ersten Endes (56) des länglichen Trägerelements (54) eingreifen, zum Beispiel sind im Eingriff befindliche Abschnitte des ersten Endes (56) des länglichen Trägerelements (54) als Aussparungen oder Falzen in dem länglichen Auflageelement vorgesehen, wobei die Aussparungen oder Falzen vorzugsweise so dimensioniert sind, dass sie eine Längsjustierung des länglichen Trägerelements (54) auf dem ersten Abschnitt (92) der Montagehalterung (90) zulassen.

24. Baugruppe nach Anspruch 22 oder 23, **dadurch gekennzeichnet, dass** die Montagehalterung (90) so ausgelegt und angeordnet ist, dass sie das längliche Trägerelement (54) in Richtung der Unterseite (10) einer Kochplatte (4) einer elektrischen Heizanordnung vorspannt, zum Beispiel hat die Montagehalterung (90) eine freitragende Form, die von einem einzelnen Metallblech oder -streifen gebildet und so ausgelegt ist, dass bei Montage an der Heizung (12) das zweite Ende (58) des länglichen Trägerelements (54) nach oben in Richtung der Unterseite (10) der Kochplatte (4) vorgespannt wird.

25. Baugruppe nach Anspruch 24, **dadurch gekennzeichnet, dass** der erste und der zweite Abschnitt (92, 98) der Montagehalterung (90) separat ausgebildet sind, so dass jeweils eine obere und eine untere Komponente entsteht, die so aneinander gefügt sind, dass eine begrenzte relative Verschiebung in einer im Wesentlichen vertikalen Ebene dazwischen zugelassen wird, Federn (124), z.B. eine Spiralfeder oder eine Blattfeder, zwischen dem ersten und relativ dazu verschiebbaren zweiten Abschnitt vorgesehen sind, die das längliche Trägerelement (54) in Richtung der Unterseite (10) der Kochplatte (4) drängen.

26. Baugruppe nach einem der Ansprüche 22 bis 25, **dadurch gekennzeichnet, dass** die Montagehalterung (90) rostfreien Stahl, plattierten Baustahl oder ein hochtemperaturbeständiges Plastikmaterial umfasst.

27. Baugruppe nach einem der vorherigen Ansprüche, **dadurch gekennzeichnet, dass** zusätzlich ein auf Temperatur ansprechendes Mittel (114) mit einem stab- oder balkenähnlichen Abschnitt vorgesehen ist.

28. Baugruppe nach Anspruch 27 in Abhängigkeit von Anspruch 11, **dadurch gekennzeichnet, dass** das auf Temperatur ansprechende Mittel (114) mit dem stab- oder balkenähnlichen Abschnitt an einem Ort angeordnet ist, der im Wesentlichen unter dem länglichen Trägerelement (54) der Temperatursensorbaugruppe liegt.

29. Baugruppe nach Anspruch 28 in Abhängigkeit von einem der Ansprüche 22 bis 26, **dadurch gekennzeichnet, dass** das auf Temperatur ansprechende Mittel (114) die Montagehalterung (90) mit dem länglichen Trägerelement (54) der Temperatursensorbaugruppe gemeinsam nutzt.

30. Baugruppe nach einem der vorherigen Ansprüche, **dadurch gekennzeichnet, dass** eine zweite Fläche (88) des Trägerelements (54) mit einer Schicht (104) aus einem Wärmestrahlung reflektierenden Material versehen ist.

31. Baugruppe nach einem der vorherigen Ansprüche, **dadurch gekennzeichnet, dass** das temperaturempfindliche elektrische Widerstandselement (38) Platin umfasst.

32. Elektrische Heizanordnung, die Folgendes umfasst: eine Kochplatte (4), die zum Beispiel ein glaskeramisches Material umfasst, mit einer Oberseite (6) zum Aufnehmen eines Kochutensils (8), und einer Unterseite (10); eine elektrische Heizung (12) mit wenigstens einem elektrischen Heizelement (20), wobei die Heizung in Kontakt mit der Unterseite der Kochplatte gelagert ist; und eine Temperatursensorbaugruppe (30) nach einem der vorherigen Ansprüche, wobei sich die Temperatursensorbaugruppe in der elektrischen Heizanordnung (2) in einem Abstand über dem wenigstens einen elektrischen Heizelement in Kontakt mit der Unterseite der Kochplatte und mit dem temperaturempfindlichen elektrischen Widerstandselement (38) der Unterseite der Kochplatte zugewandt befindet.

33. Anordnung nach Anspruch 32, **dadurch gekennzeichnet, dass** das längliche Trägerelement (54) durch eine Öffnung oder Aussparung in einer Umfangswand (18) der elektrischen Heizung (12) verläuft, so dass sich das erste Ende (56) des länglichen Trägerelements (54) außerhalb der Heizung befindet, zum Beispiel ist das längliche Trägerelement (54) mit einer Queraussparung versehen, die über eine Unterseite davon an einer Stelle verläuft, wo das längliche Trägerelement durch die Öffnung oder Aussparung in der Umfangswand (18) der Heizung verläuft, so dass die Größe der Öffnung oder Aussparung in der Umfangswand minimiert werden kann.

34. Anordnung nach Anspruch 33, **dadurch gekennzeichnet, dass** die Umfangswand (18) Wärmeisolationsmaterial umfasst oder beinhaltet.

35. Anordnung nach Anspruch 33 oder 34, **dadurch gekennzeichnet, dass** das im Wesentlichen planare Element (32) auch, auf dem länglichen Trägerelement (54), durch die Öffnung oder Aussparung in der Umfangswand (18) der elektrischen Heizung (12) verläuft, so dass sich die zweite Endregion (48) des Substrats außerhalb der Heizung befindet.

36. Anordnung nach einem der Ansprüche 32 bis 35, **dadurch gekennzeichnet, dass** das wenigstens eine elektrische Heizelement (20) ein strahlendes elektrisches Widerstandsheizelement oder ein elektrisches Induktionsheizelement umfasst.

## Revendications

1. Ensemble sonde de température pour un agencement de chauffage électrique (2), l'ensemble sonde de température étant **caractérisé par** : un substrat mince essentiellement plan (32) ayant une première surface exposée (34) munie d'un élément de résistance électrique thermosensible (38) en forme de film, et une deuxième surface (64), l'élément de résistance électrique thermosensible étant muni de fils de connexion électriques (40, 42) ; un élément de support (54) ayant une première surface adaptée pour recevoir le substrat essentiellement plan (32) avec la deuxième surface (64) du substrat juxtaposée ; et un moyen d'isolation thermique (62) interposé entre au moins la deuxième surface (64) du substrat essentiellement plan et l'élément de support au moins à une zone où est prévu l'élément de résistance électrique thermosensible (38).

2. Ensemble selon la revendication 1, **caractérisé en ce que** l'élément de support (54) a un creux (60) prévu dans sa première surface, le creux étant adapté et agencé pour recevoir le substrat essentiellement plan (32) et le moyen d'isolation thermique (62).

3. Ensemble selon la revendication 2, **caractérisé en ce que** le moyen d'isolation thermique (62) est en outre interposé entre l'élément de support (54) et un ou plusieurs bords latéraux (66, 68) du substrat essentiellement plan (32) dans le creux (60).

4. Ensemble selon l'une quelconque des revendications précédentes, **caractérisé en ce que** le moyen d'isolation thermique (62) est constitué d'une mince couche de matériau d'isolation thermique microporeux et/ou d'un moyen d'isolation thermique alternatif.

5. Ensemble selon la revendication 4, **caractérisé en ce que** le matériau d'isolation thermique alternatif (62) est sélectionné entre la vermiculite, la perlite, des fibres minérales, le silicate de calcium et une mousse inorganique, et des mélanges de ces matériaux.

6. Ensemble selon l'une quelconque des revendications précédentes, **caractérisé en ce que** le moyen d'isolation thermique (62) possède une épaisseur de 1 à 10 mm, de préférence une épaisseur de 2 à 4 mm, entre le substrat essentiellement plan (32) et l'élément de support (54).

7. Ensemble selon l'une quelconque des revendications précédentes, **caractérisé en ce que** l'élément de support (54) est constitué d'un matériau céramique, sélectionné par exemple entre la stéatite, la cordiérite et l'alumine.

8. Ensemble selon l'une quelconque des revendications 1 à 6, **caractérisé en ce que** l'élément de support (54) est constitué d'un métal, par exemple de l'acier inoxydable.

9. Ensemble selon l'une quelconque des revendications précédentes, **caractérisé en ce que** le substrat essentiellement plan (32) est sélectionné entre un matériau céramique, par exemple une céramique comprenant 85-99% en poids d'alumine, de la vitrocéramique et du nitrure d'aluminium, et un matériau métallique ayant un revêtement diélectrique.

10. Ensemble selon l'une quelconque des revendications précédentes, **caractérisé en ce que** le substrat essentiellement plan (32) a une épaisseur d'environ 0,25 mm à environ 3 mm, de préférence une épaisseur d'environ 0,5 mm à environ 1 mm.

11. Ensemble selon l'une quelconque des revendications précédentes, **caractérisé en ce que** l'élément de support (54) est de forme allongée agencée comme une poutre, et adapté pour s'étendre au moins partiellement en travers d'un appareil de chauffage (12) d'un agencement de chauffage électrique, la poutre étant adaptée pour s'étendre à partir d'une zone périphérique de l'appareil de chauffage, par exemple l'élément de support (54) de forme allongée a une première extrémité (56) adaptée pour être fixée à la zone périphérique de l'appareil de chauffage (12) et une deuxième extrémité (58) adaptée pour être à l'intérieur de l'appareil de chauffage, l'élément de résistance électrique thermosensible (38) étant situé au niveau ou à proximité de sa deuxième extrémité, les fils de connexion électrique (40, 42) s'étendant de l'élément de résistance électrique thermosensible à la première extrémité de l'élément de support.

12. Ensemble selon la revendication 11, **caractérisé en ce que** le substrat essentiellement plan (32) est de forme allongée, s'étendant le long de l'élément de support allongé (54) et ayant l'élément de résistance électrique thermosensible (38) situé à sa zone de première extrémité (36) et les fils de connexion électrique (40, 42) étant fournis sous forme de film sur le substrat et s'étendant jusqu'à sa zone de deuxième extrémité (48) située à la première extrémité (56) de l'élément de support, par exemple les fils de connexion électriques sous forme de film (40, 42) sont constitués essentiellement du même matériau que l'élément de résistance électrique thermosensible (38) ou d'un matériau similaire.

13. Ensemble selon la revendication 12, **caractérisé en ce que** des moyens formant bornes électriques (44, 46), constitués par exemple de plages de connexion électriquement conductrices, pour les fils de connexion électriques en forme de film (40, 42), sont prévus à la zone de deuxième extrémité (48) du substrat essentiellement plan (32).

14. Ensemble selon la revendication 13, **caractérisé en ce que** les plages de connexion électriquement conductrices (44, 46) sont constituées essentiellement du même matériau que les fils de connexion électrique (40, 42) ou d'un matériau similaire, ou d'un matériau différent, comprenant par exemple l'or.

15. Ensemble selon la revendication 13 ou 14, **caractérisé en ce que** des fils de connexion extérieurs (136, 138) sont agencés pour être connectés aux moyens formant bornes électriques (44, 46), par exemple par soudage ou brasage.

16. Ensemble selon l'une quelconque des revendications 13 à 15, **caractérisé en ce que** des trous (50, 52) sont prévus au travers des plages de connexion (44, 46) et au travers du substrat essentiellement plan (32) pour recevoir des éléments de connexion électrique (76, 78), les éléments de connexion électrique (76, 78) ayant par exemple des cosses ou des broches (44, 46) comme bornes électriquement conductrices qui leur sont associées pour la connexion à des circuits extérieurs (84, 86).

17. Ensemble selon la revendication 16, **caractérisé en ce que** les trous (72, 74) sont aussi prévus au travers d'une zone sous-jacente de l'élément de support (54) et agencés pour recevoir les éléments de connexion électrique (38), grâce à quoi le substrat essentiellement plan (32) est fixé à l'élément de support.

18. Ensemble selon la revendication 16 ou 17, **caractérisé en ce que** les éléments de connexion électrique (76, 78) comprennent des boulons, par exemple des boulons constitués de laiton, plaqués d'or, d'argent ou de nickel, des broches ou des rivets, par exemple des rivets constitués de laiton ou de cuivre, plaqués d'or, d'argent ou de nickel.

19. Ensemble selon l'une quelconque des revendications 12 à 18, **caractérisé en ce que** le moyen d'isolation thermique (62) est prévu interposé entre le substrat essentiellement plan allongé (32) et l'élément de support allongé (54) essentiellement sur toute la longueur du substrat ou essentiellement seulement sur une zone de celui-ci où est prévu l'élément de résistance électrique thermosensible (38).

20. Ensemble selon la revendication 19, **caractérisé en ce que** le moyen d'isolation thermique (62) n'est prévu essentiellement que dans la zone où est prévu l'élément de résistance électrique thermosensible (38).

21. Ensemble selon la revendication 19 ou 20, **caractérisé en ce qu'**au moins un moyen formant fente (110, 112) est prévu et s'étend au travers et partiellement en travers du substrat (32), grâce à quoi la conduction thermique le long du substrat est réduite.

22. Ensemble selon l'une quelconque des revendications précédentes, **caractérisé en ce qu'**un support de montage métallique (90) est prévu, ayant une première partie (92) fixée à la première extrémité (56) de l'élément de support allongé (54), adapté pour être fixé extérieurement à un appareil de chauffage (12) d'un agencement de chauffage électrique, et une deuxième partie (98) pour la fixation à une zone extérieure de l'appareil de chauffage, la deuxième partie étant par exemple adaptée pour être fixée à la zone extérieure d'une paroi périphérique (18) de l'appareil de chauffage (12).

23. Ensemble selon la revendication 22, **caractérisé en ce que** la première partie (92) du support de montage (90) est agencée avec un moyen formant crochet (94) qui s'engage dans des parties de la première extrémité (56) de l'élément de support allongé (54), par exemple des parties engagées de la première extrémité (56) de l'élément de support allongé (54) prévues sous forme de creux ou de feuillures dans l'élément de support allongé, les creux ou feuillures étant de préférence dimensionnés pour permettre le réglage longitudinal de l'élément de support allongé (54) sur la première partie (92) du support de montage (90).

24. Ensemble selon la revendication 22 ou 23, **caractérisé en ce que** le support de montage (90) est adapté et agencé pour pousser l'élément de support allongé (54) vers la surface inférieure (10) d'une plaque de cuisson (4) d'un agencement de chauffage électrique, par exemple le support de montage (90) est de forme en porte-à-faux, formé d'une seule feuille ou bande de métal et agencé de telle sorte que, lorsqu'il est monté sur l'appareil de chauffage (12), la deuxième extrémité (58) de l'élément de support allongé (54) est poussée vers le haut en direction de la surface inférieure (10) de la plaque de cuisson (4).

25. Ensemble selon la revendication 24, **caractérisé en ce que** les première et deuxième parties (92, 98) du support de montage (90) sont formées séparément, afin de fournir des composants supérieur et inférieur, respectivement, et assemblés ensemble de telle sorte qu'un déplacement relatif limité dans un plan essentiellement vertical est autorisé entre eux, un moyen formant ressort (124), par exemple sous forme de ressort hélicoïdal ou de ressort à lame, étant prévu entre les première et deuxième parties à déplacement relatif et agissant pour pousser l'élément de support allongé (54) vers la surface inférieure (10) de la plaque de cuisson (4).

26. Ensemble selon l'une quelconque des revendications 22 à 25, **caractérisé en ce que** le support de montage (90) est constitué d'acier inoxydable, d'acier doux plaqué ou d'une matière plastique résistante aux hautes températures.

27. Ensemble selon l'une quelconque des revendications précédentes, **caractérisé en ce qu'**un moyen réagissant à la température (114) est en outre prévu et possède une partie en forme de tige ou de poutre.

28. Ensemble selon la revendication 27, sous la forme subordonnée à la revendication 11, **caractérisé en ce que** le moyen réagissant à la température (114) est agencé avec la partie en forme de tige ou de poutre à un emplacement essentiellement sous-jacent à l'élément de support allongé (54) de l'ensemble sonde de température.

29. Ensemble selon la revendication 28, sous la forme subordonnée à l'une quelconque des revendications 22 à 26, **caractérisé en ce que** le moyen réagissant à la température (114) partage le support de montage (90) fourni pour l'élément de support allongé (54) de l'ensemble sonde de température.

30. Ensemble selon l'une quelconque des revendications précédentes, **caractérisé en ce que** l'élément de support (54) a une deuxième surface (88) munie d'une couche (104) de matériau réfléchissant les rayonnements thermiques.

31. Ensemble selon l'une quelconque des revendications précédentes, **caractérisé en ce que** l'élément de résistance électrique thermosensible (38) est constitué de platine.

32. Agencement chauffant électrique comprenant : une plaque de cuisson (4), constituée par exemple de matériau vitrocéramique, ayant une surface supérieure (6) pour recevoir un ustensile de cuisine (8), et une surface inférieure (10) ; un appareil de chauffage électrique (12) comportant au moins un élément chauffant électrique (20), l'appareil de chauffage étant supporté en contact avec la surface inférieure de la plaque de cuisson ; et un ensemble sonde de température (30) selon l'une quelconque des revendications précédentes, l'ensemble sonde de température étant situé dans l'agencement chauffant électrique (2) espacé au-dessus du ou des éléments chauffants électriques en contact avec la surface inférieure de la plaque de cuisson et l'élément de résistance électrique thermosensible (38) faisant face à la surface inférieure de la plaque de cuisson.

33. Agencement selon la revendication 32, **caractérisé en ce que** l'élément de support allongé (54) traverse une ouverture ou un creux prévu dans une paroi périphérique (18) de l'appareil de chauffage électrique (12) et de telle sorte que la première extrémité (56) de l'élément de support allongé (54) est située à l'extérieur de l'appareil de chauffage, par exemple l'élément de support allongé (54) est muni d'un creux transversal s'étendant en travers de sa surface inférieure à un emplacement où l'élément de support allongé traverse l'ouverture ou le creux dans la paroi périphérique (18) de l'appareil de chauffage, grâce à quoi la taille de l'ouverture ou du creux dans la paroi périphérique peut être minimisée.

34. Agencement selon la revendication 33, **caractérisé en ce que** la paroi périphérique (18) est constituée d'un matériau d'isolation thermique ou en comporte un.

35. Agencement selon la revendication 33 ou 34, **caractérisé en ce que** le substrat essentiellement plan (32) traverse aussi, sur l'élément de support allongé (54), l'ouverture ou le creux prévu dans la paroi périphérique (18) de l'appareil de chauffage électrique (12), de telle sorte que la zone de deuxième extrémité (48) du substrat est située à l'extérieur de l'appareil de chauffage.

36. Agencement selon l'une quelconque des revendications 32 à 35, **caractérisé en ce que** le ou les éléments chauffants électriques (20) sont constitués d'un élément chauffant à résistance électrique à rayonnement ou d'un élément chauffant électrique à induction.
